**Europäisches Patentamt**

**European Patent Office**

**Office européen des brevets**

(11) Veröffentlichungsnummer: **0 149 071**
**A2**

# EUROPÄISCHE PATENTANMELDUNG

(21) Anmeldenummer: **84114352.2**

(22) Anmeldetag: **27.11.84**

(51) Int. Cl.⁴: **A 22 C 13/00**

(30) Priorität: **02.12.83 DE 3343635**

(43) Veröffentlichungstag der Anmeldung:
**24.07.85 Patentblatt 85/30**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt am Main 80(DE)**

(72) Erfinder: **Kastl, Erna**
**Finkenweg 5**
**D-6204 Taunusstein(DE)**

(72) Erfinder: **Klenk, Ludwig**
**Jungferweg 20**
**D-6227 Oestrich-Winkel III(DE)**

(72) Erfinder: **Faust, Horst**
**Lohmühlweg 17**
**D-6200 Wiesbaden(DE)**

(72) Erfinder: **Stenger, Karl**
**Theodor-Heuss-Strasse 27**
**D-6220 Rüdesheim(DE)**

(54) Folie aus faserverstärkter regenerierter Cellulose mit gasundurchlässiger Schicht zur Herstellung von Schlauchhüllen.

(57) Die Folie aus faserverstärkter regenerierter Cellulose zeigt auf beiden Oberflächen jeweils eine Schicht aus siegelfähigem Material. Während die eine Oberflächenschicht gasundurchlässig ist, zeigt die andere Oberflächenschicht parallel zueinander sich erstreckende linienförmige Unterbrechungen. Beide Schichten bestehen bevorzugt aus Vinylidengruppen enthaltenden Copolymeren und sind gegebenenfalls mit einer haftvermittelnden Schicht auf der Folienoberfläche verankert. Die Folie ist geeignet zur Herstellung von Schlauchhüllen, insbesondere Wursthüllen, mit einer längsaxialen gesiegelten Naht.

Beschrieben werden ferner ein Verfahren zur Herstellung der Folie durch Koagulation von Viskose und anschließendes Aufbringen des Oberflächenmaterials auf die noch im Gelzustand befindliche Cellulosefolie.

HOECHST AKTIENGESELLSCHAFT
KALLE Niederlassung der Hoechst AG

83/ K075                                    22. November 1984
                                            WLJ-Dr.Gt-cc
                        -1-


Folie aus faserverstärkter regenerierter Cellulose mit
gasundurchlässiger Schicht zur Herstellung von Schlauchhüllen.


Die Erfindung bezieht sich auf eine Folie von der im Oberbegriff des Anspruchs 1 genannten Art, auf ein Verfahren zur Herstellung dieser Folie sowie auf ihre Verwendung in schlauchförmigen Verpackungshüllen, insbesondere Wursthüllen, mit einer längsaxialen Siegelnaht.

Aus der EP-A-0 054 162 ist eine Schlauchhülle, insbesondere Wursthülle, bekannt geworden, die aus einer Folienbahn der gleichen Gattung hergestellt wird, indem man die Folienbahn zu einem Schlauch formt und die beiden sich genäherten Randbereiche mit einem Folienstreifen verbindet, indem man den Folienstreifen gegen die gasundurchlässige siegelfähige Oberflächenschicht der Folienbahn siegelt. Diese Schlauchhülle ist wegen ihrer sauerstoff-, wasser- und wasserdampfundurchlässigen Schicht beispielsweise als Wursthülle für Koch- und Brühwürste geeignet.

Wie sich allerdings gezeigt hat, ist die Bildung einer Längsnaht durch Versiegeln der Randzonen mit einem Folienstreifen problematisch. Wird dagegen aus dem bekannten Folienmaterial eine Überlappungsnaht gebildet, so ist diese relativ schwach und neigt zum Aufreißen.

Darüberhinaus ist auch eine Schlauchhülle aus faserverstärkter regenerierter Cellulose beschrieben worden (DE-A-29 35 080), die außer einer gasundurchlässigen Innenschicht aus einem Vinylidenchlorid-Copolymer eine gasdurchlässige Außenschicht aus einem Vinylidenchlorid-Copolymer aufweist. Diese Schlauchhülle ist allerdings nahtlos, so daß dort die der vorliegenden Erfindung zugrundeliegenden Probleme nicht auftreten. Die gasdurchlässige Außenschicht soll bei der bekannten Schlauchhülle, bei ihrer Verwendung als Wursthülle, die Stoßempfindlichkeit herabsetzen und beim Anschneiden der Wurst das Ein- oder Weiterreißen der Wursthülle verhindern.

Solche nahtlose Schläuche aus faserverstärkter regenerierter Cellulose werden nach einem ganz anderen Verfahren hergestellt. Eine Faservliesbahn wird zu einem Schlauch geformt, dessen Ränder sich überlappen und mit Viskose verklebt werden. Nach ein- oder beidseitiger Beschichtung des nun schlauchförmigen Faservlieses mit Viskose aus Ringschlitzdüsen wird der Schlauch koaguliert, zu Cellulosehydrat-Gel regeneriert und getrocknet. Während dieses Prozesses wird der Schlauch durch das bei der Koagulation und Regenerierung entstehende Gasgemisch und während des Trocknens durch ein eingebrachtes eingeschlossenes Luftvolumen abgestützt und gegebenenfalls zur Verbesserung der mechanischen Eigenschaften in Längs- und Querrichtung gestreckt.

Nachteiligerweise treten beispielsweise an den Kanten des flachgelegten Gelschlauchs längsaxial im Kantenbereich sich erstreckende Schwächungszonen auf, sogenannte Spinnkanten. Ferner zeigt auch das Streckverfahren Nachteile. Sowohl der Innendruck der Prozeßgase als auch der Innendruck beim Trocknen kann nicht präzise genug gesteuert werden, so daß der Durchmesser der Schläuche innerhalb enger Grenzen nicht konstant gehalten werden kann. Ferner ist es von Nachteil, daß beim Strecken von Schläuchen mit einem Spreizgas das Verhältnis der in tangentialer und radialer Richtung wirksamen Streckkräfte festgelegt ist, so daß der nahtlose Schlauch auch aus diesem Grund bezüglich seiner mechanischen Eigenschaften, insbesondere bezüglich der Schrumpfeigenschaften und der Festigkeit in Längs- und Querrichtung, festgelegt ist.

Die für die Verwendung des Schlauches als Wursthülle für Koch- und Brühwürste erforderliche Innenbeschichtung aus z.B. wasser- und wasserdampfundurchlässigem Material wird in das Innere des nahtlosen Schlauches in Lösung oder Dispersion eingebracht, was verfahrenstechnisch aufwendig ist und mit Störungen verbunden sein kann. Das Lösungs- oder Dispersionsmittel muß z.B. in einer zeitaufwendigen Prozeßstufe durch die Schlauchwand nach außen hindurchdiffundieren. Ferner ist die Filmbildung auf der inneren Oberfläche des Schlauches nur schwer kontrollierbar. Schließlich werden durch den Beschichtungsprozeß häufig die während der Schlauchherstellung mit hohem Aufwand eingestellten mechanischen Eigenschaften nachteilig verändert. Da die Schläuche unmittelbar nach der Beschichtung flachgelegt werden müssen, besteht die Gefahr, daß die wasserdampfdichte Überzugsschicht im Bereich der Quetschkante verletzt oder ge-

H O E C H S T   A K T I E N G E S E L L S C H A F T
KALLE  Niederlassung der Hoechst AG

- 4 -

schwächt wird. Diese Beschichtungsfehler führen dazu, daß das Füllgut durch Wasserverlust oder Sauerstoffzutritt verdirbt oder unansehnlich wird.

Um diese Nachteile der nahtlosen Schläuche aus faserverstärkter regenerierter Cellulose zu vermeiden, wendet sich die Erfindung den Schläuchen mit einer Siegelnaht zu, welche aus einer flachen Folienbahn hergestellt werden (EP-A-0 054 162).

Es ist deshalb Aufgabe der Erfindung, eine gasundurchlässige Folie aus faserverstärkter regenerierter Cellulose, d.h. eine Folie mit einer Sperrschicht für Sauerstoff, Wasser und Wasserdampf, anzugeben, die sich in eine Schlauchhülle mit erhöhter Siegelnahtfestigkeit überführen läßt. Es ist ferner Aufgabe der Erfindung, ein Verfahren zur Herstellung dieser Folie zu finden, das mit geringem technischem Aufwand durchgeführt werden kann, sowie eine Schlauchhülle anzugeben, deren Siegelnaht eine hohe Festigkeit aufweist und der mechanischen Belastung bei ihrer Verarbeitung, insbesondere beim Einpressen von Füllgut, standhält. Außerdem darf sich das Folienmaterial gegenüber dem bekannten in seinem Dehnungsverhalten und mechanischen Eigenschaften nicht verschlechtern, da es sonst zur Herstellung von schlauchförmigen Verpackungshüllen, insbesondere Wursthüllen, nicht mehr geeignet ist.

Ausgehend von einer Folie mit einer geschlossenen, gasundurchlässigen Harzschicht auf ihrer einen Oberfläche stößt man bei der Suche nach einer Lösung dieser Aufgabe auf die Schwierigkeit, daß bei Abänderungen im Folienaufbau die bisherigen vorteilhaften Eigenschaften dieser bekannten Folie negativ beeinflußt werden können. Wird aus dieser Folie z.B. eine Wursthülle hergestellt, so müssen sich ihre Eigenschaften so einstellen lassen, daß die Wursthülle nach dem Füllen mit Wurstbrät und Brühen bzw. Kochen stark schrumpft und sich dabei eng an die Wurstmasse anlegt oder daß die Wursthülle gerade dieses Schrumpfen nach dem Kochen bzw. Brühen praktisch überhaupt nicht zeigt. Eine neue Veränderung der Folie darf im ersten Fall auch nicht dazu führen, daß dann zwischen dem Inhalt und der Hülle Zwischenräume entstehen, in denen sich Fett absondern könnte. Außerdem darf die praktisch völlige Undurchlässigkeit der Barriereschicht gegenüber Gasen, insbesondere Wasser und Luftsauerstoff, nicht verschlechtert werden.

Diese Aufgaben werden gelöst durch die im Anspruch 1 angegebene Folie, durch das Verfahren mit den im Anspruch 7 genannten Merkmalen, durch die Schlauchhülle nach Anspruch 5, die aus dieser Folie hergestellt wird, sowie durch die Schlauchhülle nach Anspruch 6, bei der zumindest der Folienstreifen aus dieser Folie besteht.

Als eine im wesentlichen gasundurchlässige Schicht ist ein Überzug zu betrachten, der eine Wasserdampfdurchlässigkeit von kleiner als 10 g/m$^2$.d (DIN 53 122) besitzt. Insbesondere wenn das Harz dieser Schicht ein Vinylidengruppen enthaltendes Copolymer ist, können Werte von nur

HOECHST AKTIENGESELLSCHAFT
KALLE Niederlassung der Hoechst AG

- 6 -

0,5 bis 2 g/m$^2$.d erreicht werden. Diese Uberzugsschicht ist völlig unterbrechungsfrei und wird im folgenden auch als "Sperrschicht" oder "Barriereschicht" bezeichnet.

Die Schicht mit Unterbrechungen ist dagegen für Gase, insbesondere für Wasserdampf, durchlässig, wobei ihre Wasserdampfdurchlässigkeit allerdings geringer ist als die der völlig unbeschichteten Folie aus faserverstärkter regenerierter Cellulose. Sie ist größer als 200, vorzugsweise 300 bis 700, insbesondere 350 bis 500 g/m$^2$.d (DIN 53 122). Diese Schicht wird im folgenden als "unterbrochene" Schicht oder als "durchlässige" Schicht bezeichnet.

Beide Oberflächenschichten sind über den gesamten Bereich der beiden Oberflächen der Folie vorhanden.

Folien und daraus hergestellte Schlauchhüllen mit einer Siegelnaht mit einer gasundurchlässigen Oberflächenschicht aus einem thermoplastischen siegelfähigen Harz, insbesondere aus einem Vinylidengruppen enthaltenden Copolymeren, die gegebenenfalls auch durch eine haftvermittelnde Harzschicht mit der Folienoberfläche verankert ist, und ihre Herstellung sind bekannt. Das für den gasdichten Überzug geeignete Material wird z.B. in der EP-A-0 054 162 (Seite 20, Zeile 6, bis Seite 21, Zeile 21) angegeben. Das aus dieser Druckschrift bekannte Sperrschichtmaterial wird auch im vorliegenden Fall verwendet.

Unter Haftvermittler in bezug auf Oberflächenschichten sind bekanntlich Stoffe oder Stoffgemische zu verstehen, die vor dem Auftrag der Schichten auf die Oberflächen der Folie aufgebracht werden, um die Haftung zwischen den Folienoberflächen und den Schichten zu verbessern. Falls erforderlich, soll er im vorliegenden Fall die durchlässige Oberflächenschicht und/oder die Barriereschicht auf den Folienoberflächen naßfest verankern. Er wird insbesondere eingesetzt, wenn eine besonders hohe mechanische Festigkeit der Siegelnaht erreicht werden soll. Er befindet sich zwischen den Oberflächenschichten und der Folienoberfläche. Er ist vorzugsweise ein wasserunlösliches, gehärtetes, kationisches Harz. Polyurethanharze, Nitrocellulose und andere als wasserunlösliche Verankerungsmittel bekannte Verbindungen können ebenfalls eingesetzt werden.

Obwohl es zur Erhöhung der Siegelnahtfestigkeit ausreichen würde, daß die haftvermittelnde Harzschicht nur im Bereich der zu versiegelnden Flächen der Folienbahn vorhanden ist, ist es aus technischen Gründen zweckmäßig, beide Oberflächen der Folie vollflächig mit einer oder zwei verschiedenen haftvermittelnden Harzschichten zu versehen.

Die den Haftvermittler enthaltende Dispersion wird bereits bei der Herstellung der faserverstärkten Folie aus Cellulosehydrat auf die bereits regenerierte, aber noch nicht getrocknete Gelbahn aufgebracht. Dieser Auftrag kann vor, gleichzeitig oder nach der Behandlung der Gelbahn mit einem Weichmacher, wie z.B. einem Polyol, vor-

HOECHST AKTIENGESELLSCHAFT
KALLE Niederlassung der Hoechst AG

- 8 -

genommen werden. Die faserverstärkte Folie aus regenerierter, aber noch nicht getrockneter Cellulose, d.h. aus Cellulosehydrat-Gel, wird vor dem Beschichten mit den die beiden Oberflächenschichten ausbildenden Polymeren mit einer wäßrigen Lösung überzogen, die bis zu 25 Gew.-% eines dispergierbaren Haftvermittlers, insbesondere eines wärmehärtbaren kationischen Harzes enthält.

Durch die anschließenden Trockenstufen wird das Harz zu seiner wasserunlöslichen Form gehärtet und geht eine dauerhafte Bindung mit der Oberfläche der Folie ein.

Die haftvermittelnde Harzschicht hat ein Flächengewicht von etwa 30 - 300 mg/m$^2$, vorzugsweise 40 bis 75 mg/m$^2$.

Beispiele für das kationische hitzehärtbare Harz sowie geeignete Lösungsmittel und eventuelle Zusätze sind in der EP-A-0 054 162 (Seite 15, Zeile 6 bis Seite 19, Zeile 20) angegeben.

Besonders bevorzugte kationische hitzehärtbare Harze sind Kondensationsprodukte von Polyamidpolyamin oder aliphatischen Polyaminen oder von Polyamiden mit bifunktionellen Halohydrinen oder deren Derivaten, die ebenfalls in der EP-A-0 054 162 als Material für die Verankerungsschicht ausführlich beschrieben sind.

Nach dem Aufbringen der Dispersion des Haftvermittlers erfolgt die als Teilentwässerung oder Vortrocknung bezeichnete Reduzierung des Wassergehaltes der Folie aus Cellulosehydrat-Gel auf einen Wassergehalt von 130 bis 200 Gew.-%, bezogen auf die Cellulose. Bei dieser Teilentwässerung wird unter Wärmeeinwirkung das kationische Harz teilweise vorgehärtet.

Wesentlich für die Lösung des eingangs dargestellten Problems ist die zusätzliche Oberflächenschicht auf der zweiten Oberfläche der Folie bzw. der Schlauchhülle, die im Gegensatz zu der ersten Oberfläche eine gasdurchlässige Schicht trägt. Die Begriffe "erste" und "zweite" Oberfläche sollen keine Reihenfolge angeben, sondern dienen nur zur Kennzeichnung der beiden Oberflächen der Folie bzw. der Schlauchhülle.

Das Material der durchlässigen Oberflächenschicht ist heißsiegelfähig, d.h. es umfaßt einen Stoff, der bei der Versiegelung thermisch aktiviert wird. Die abgebundene, lösungsmittelfreie durchlässige Oberflächenschicht soll nicht klebrig sein, sondern erst durch Wärmezufuhr während der Siegelung aufschmelzen und sich beim Abkühlen wieder verfestigen.

Als Rohstoff für die Schicht auf der zweiten Oberfläche der Folie werden Copolymere des Vinylchlorids oder des Vinylidenchlorids gegebenenfalls unter Zusatz von anderen Harzen und anderen Polymeren, benutzt. Daneben werden Copolymere des Vinylacetats sowie Polymethacrylsäureester, Polyurethane und Polyester, insbesondere Äthylen-Vinylacetat-Copolymere, Vinylacetat-Vinylchlorid-Copolymere, Polyamide und Polyäthylen, angewendet.

HOECHST AKTIENGESELLSCHAFT
KALLE Niederlassung der Hoechst AG

- 10 -

Als siegelfähiges thermoplastisches Material wird insbesondere ein Vinylidencopolymer, das mit einem Flächengewicht von gewöhnlich 3 bis 15 g/m$^2$ vorhanden ist, eingesetzt. Diese gewöhnlich wasserdampf- und rauchundurchlässigen geschlossenen Filme erhalten durch das Verfahren der Erfindung eine unterbrochene Struktur. Geeignete Harze werden durch Mischpolymerisation von Monomeren erhalten, wobei wenigstens eine Komponente eine Vinylidengruppe enthält.

Hierbei handelt es sich um die gleichen Copolymeren, wie sie in der EP-A-0 054 162 (Seite 20, Zeile 13, bis Seite 21, Zeile 21) als Material für die gasdichte Beschichtung angegeben werden.

Die zweite Oberfläche der Folie ist praktisch über die gesamte Folienbreite mit einer Schicht aus diesem thermoplastischen Harz versehen, welche Unterbrechungen aufweist. Diese Unterbrechungen bedecken im Verhältnis zur Gesamtfläche einen relativ geringen Oberflächenanteil, so daß etwa mehr als 60 %, insbesondere mehr als 85 %, der zweiten Oberfläche mit der Oberflächenschicht bedeckt sind, damit eine ausreichende Siegelnahtfestigkeit vorhanden ist.

Ein Verfahren zur Herstellung der Folie ist im Anspruch 7 angegeben. Hierbei erhält die Schicht auf der zweiten Oberfläche parallel zueinander und in Maschinenrichtung, d.h. in Längsrichtung der bahnförmig hergestellten Folie, sich erstreckende linienförmige Risse im Mikrometerbereich. Die rißartigen Unterbrechungen verteilen sich über die gesamte zweite Fläche der Folie. Die bevorzugten Maße der linienförmigen Risse sind im Anspruch 2 angegeben. Die relativ langen Risse, d.h. mit einer Länge von größer als 300 µm, zeigen Abstände von 40 bis 80 µm, wobei im Durchschnitt die Werte um 60 µm liegen. Die Tiefe der Risse entspricht der Dicke der Oberflächenschicht, so daß im Bereich der Risse die Cellulose im wesentlichen unbedeckt ist. Die Breite der Risse ist praktisch über die gesamte Länge und Tiefe konstant. Die Länge der Risse variiert dagegen insbesondere im Bereich von 15 bis 500 µm. Die Länge und Breite der Risse wird durch eine 300fach vergrößerte Aufnahme mit einem Rasterelektronenmikroskop ermittelt. Die Tiefe der Risse wird am Querschnitt der Folie bei 2000facher Vergrößerung festgestellt.

Das eigentliche Trägermaterial der Folie besteht aus faserverstärkter Cellulose (Zellglas, regenerierte Cellulose, Cellulosehydrat), die als faserverstärkte Cellulosebahn nach dem Viskoseverfahren (EP-A-0 054 162) hergestellt wurde.

Die Faserverstärkung ist insbesondere bahnförmig, z.B. eine Papierbahn, und besteht gewöhnlich aus Fasern wie sie bei der Herstellung von Papier oder Reispapier verwendet werden, oder aus nativen Fasern wie Hanf- oder Flachsfasern, oder synthetischen Fasern wie Polyamid-, Polyester- oder Polyacrylnitril-Fasern.

HOECHST AKTIENGESELLSCHAFT
KALLE Niederlassung der Hoechst AG

- 12-

Die Faserbahn wird vorzugsweise beidseitig mit einer Viskoselösung behandelt, insbesondere in eine Viskoselösung getaucht oder mit einer Viskoselösung beschichtet, z.B. mit schlitzförmigen Düsen, Walzen oder durch Sprühvorrichtungen, und anschließend in regenerierte Cellulose übergeführt.

Es ist auch möglich, in die Viskose 10 bis 80 Gew.-% Verstärkungsfasern einzuarbeiten, die zweckmäßigerweise eine mittlere Faserlänge von 0,05 bis 15 mm aufweisen. Die Fasern bestehen aus organischen Kunstfasern, aus Naturfasern, z.B. Baumwollfasern oder aus Fibriden. Die Fasern enthaltende Viskose wird dann durch eine Düse in das Koagulationsbad ausgepreßt unter Bildung einer Gelbahn.

Die Viskoselösung ist eine alkalische Lösung von Natrium-Cellulosexanthogenat und wird üblicherweise hergestellt durch Umsetzung der aus Cellulose mit Natriumhydroxidlösung erhaltenen Alkalicellulose mit Schwefelkohlenstoff im alkalischen Medium; sie enthält meist 4 bis 20 Gew.-% Cellulose. Nach der Reifung wird die Viskose auf die Faserbahn aufgebracht und versponnen, d.h. koaguliert. Das Spinnbad enthält beispielsweise 20 bis 80 g/l Schwe-felsäure, ferner 80 bis 150 g/l Natriumsulfat und/oder 150 bis 300 g/l Ammoniumsulfat.

In weiteren Stufen wird das aus koagulierter Viskose bestehende faserverstärkte bahnförmige Produkt in saurem Medium, z.B. in verdünnter (kleiner/gleich 5 Gew.-%)

HOECHST AKTIENGESELLSCHAFT
KALLE Niederlassung der Hoechst AG

- 13 -

Schwefelsäure, zu Cellulosehydrat-Gel regeneriert, zur
Entfernung von Säure und Salzen mit Wasser gewaschen,
mit z.B. Natriumsulfitlösung entschwefelt, gegebenenfalls durch ein Bleichbad und schließlich durch ein
Weichmacherbad mit z.B. wäßriger 5 bis 30%iger Glycerinlösung geführt.

Bevor die faserverstärkte Folie aus Cellulosehydrat-Gel
abschließend durch intensive Trocknung bei 90 bis 160°C
in regenerierte Cellulose übergeführt und gegebenenfalls
durch Konditionierung auf einen Wassergehalt von etwa
5 bis 15 Gew.-%, bezogen auf das Gesamtgewicht, eingestellt wird, wird wie im Anspruch 7 angegeben, die faserverstärkte Folie aus Cellulosehydrat-Gel - nachdem sie
gegebenenfalls mit einer einen Haftvermittler enthaltenden Flüssigkeit behandelt wurde - teilentwässert und
danach auf der einen Oberfläche mit dem die geschlossene
Sperrschicht ausbildenden Mittel und auf der anderen
Oberfläche mit dem die durchlässige Schicht ausbildenden
Mittel beaufschlagt. Die Reihenfolge der auf die Teilentwässerung folgenden Beschichtungen kann beliebig gewählt werden, wobei auch eine gleichzeitige Beschichtung
möglich ist. Es ist auch möglich, das die geschlossene
Sperrschicht ausbildende Mittel bereits unmittelbar vor
der Teilentwässerung aufzubringen. In einer bevorzugten
Verfahrensvariante erfolgt die Reihenfolge der Beschichtungen wie im Beispiel angegeben. Die faserverstärkte
Folie zeigt nach der abschließenden Trocknung eine Dicke
von 50 bis 200 /um entsprechend einem Flächengewicht von
50 bis 250 g/m², und gewöhnlich einen Feuchtigkeitsgehalt von weniger als 15, insbesondere 5 bis 10 Gew.-%,
bezogen auf das Gesamtgewicht der Folie. Die Uberzugsdicke der beiden Oberflächenschichten liegt bei 5 bis
50, vorzugsweise 5 bis 25, insbesondere 5 bis 15 /um.

Eine besonders vorteilhafte Folie wird erhalten, wenn
man, wie in EP-A-0 054 162 beschrieben, die Faserbahn,
insbesondere während die Viskose koaguliert wird und
beim abschließenden Trockenprozeß, gegebenenfalls aber
auch während der Beschichtung mit Viskose, beim Regenerieren, beim Beschichten mit Haftvermittler und/oder
beim Beschichten mit siegelfähigem Material, an den
Rändern festhält, so daß ein Schrumpfen der Bahn verhindert wird.

Es ist für die bevorzugte Verfahrensvariante nach Anspruch 7 erfindungswesentlich, unmittelbar vor dem Beaufschlagen der faserverstärkten Folienbahn aus bereits
regenerierter, aber noch nicht getrockneter Cellulose,
d.h. aus Cellulosehydrat-Gel, mit den die beiden Schichten ausbildenden Mitteln, den Wassergehalt dieser Folienbahn, der bekanntlich relativ hoch ist und gewöhnlich
240 bis 300 Gew.-%, bezogen auf die Cellulose, beträgt,
auf Werte von 130 bis 200, insbesondere 140 bis 180
Gew.-% zu reduzieren. Während dieser als Teilentwässerung bezeichneten Zwischenstufe läßt man einen Schrumpf
der Folienbahn quer zur Maschinenrichtung zu, indem man
die Folienbahn während dieses Vortrocknens nicht an den
Rändern festhält. Die für diese Teilentwässerung erforderliche Wärme wird mit an sich bekannten Mitteln der Folienbahn zugeführt, z.B. mit Heißluft oder Heizstrahlern.

Ein weiteres wesentliches Merkmal des Verfahrens nach Anspruch 7 besteht darin, zum anschließenden Beaufschlagen der teilentwässerten faserverstärkten Folienbahn aus Cellulosehydrat-Gel mit dem die durchlässige Schicht ausbildenden Mittel eine hochkonzentrierte wäßrige Dispersion zu verwenden, deren Feststoffgehalt mindestens 45, vorzugsweise 45 bis 65, insbesondere 50 bis 60 Gew.-% beträgt und zum Beaufschlagen des die Sperrschicht ausbildenden Mittels eine niedrigkonzentrierte wäßrige Dispersion zu verwenden, z.B. 10 bis 35 Gew.-%, wie sie bei der Herstellung von gasdichten Oberflächenschichten bekannt sind. Es ist besonders zweckmäßig, wenn bei diesen Beschichtungsvorgängen die Wassermenge, welche von der teilentwässerten Folie aus Cellulosehydrat-Gel von der hochkonzentrierten Dispersion aufgenommen wird, kleiner ist als die Wassermenge, welche die Folie bei der vorhergehenden Teilentwässerung abgegeben hat (Anspruch 8). Umgekehrt soll die Wassermenge, welche die Folie aus der Dispersion mit niedrigerer Konzentration aufnimmt, möglichst groß sein. Sofern diese Dispersion nach der Vortrocknung aufgebracht wird, ist diese Wassermenge vorteilhafterweise sogar größer als die bei der Vortrocknung von der Folie abgegebene Wassermenge. Die Menge der von der Folie aufzunehmenden Wassermenge wird durch eine entsprechende Einstellung des Feststoffgehaltes der Dispersion und/oder ihrer Einwirkzeit auf die Folie erreicht.

Ein wesentlicher Verfahrensschritt besteht ferner darin, daß man die Bahn aus dem Cellulosehydrat-Gel, die während der Teilentwässerung vor dem Beschichten mit dem die Oberflächenschichten ausbildenden Dispersionen geschrumpft ist, während des abschließenden Trockenprozesses zusätzlich in Querrichtung um etwa 1 bis 15, insbesondere 3 bis 12 % streckt, bezogen auf die ursprüngliche Breite der Faserbahn, wodurch der während der Teilentwässerung eingetretene geringe Schrumpf der Bahn in Querrichtung zumindest ausgeglichen wird. Unmittelbar vor diesem Strecken beim abschließenden Trockenprozeß und somit nach dem Beschichten mit dem die durchlässige Schicht ausbildenden Material wird gegebenenfalls eine weitere Vortrocknung durchgeführt, bei der die Hauptmenge an Wasser entfernt wird, bis die Gel-Bahn einen Wassergehalt von etwa 80 bis 150 Gew.-% aufweist. Auch dieser Verfahrenschritt wird in der EP-A-0 054 162 beschrieben.

Die infolge der schrumpfverhindernden Maßnahmen und der Querverstreckung während des Trockenprozesses erreichten Festigkeitswerte der Folie in Längs- und Querrichtung sind wesentlich für die Herstellung der Schlauchhülle mit einer Längsnaht. Die Reißfestigkeit kann 30 bis 35 N/mm$^2$ und die Reißdehnung 30 bis 50 % (gemessen wie in EP-A-0 054 162 angegeben) erreichen.

Das einseitige Beschichten der Folienbahn mit der jeweiligen Dispersion erfolgt beispielsweise mit einer Drahtrakel (wire bar). Es kann aber auch jede andere

HOECHST AKTIENGESELLSCHAFT
KALLE Niederlassung der Hoechst AG

- 17 -

dosierende Beschichtungsvorrichtung verwendet werden, die sich zum kontinuierlichen Beschichten bewegter Bahnen eignet und die eine nur kurze Kontaktzeit (0,1 bis 2 s) zwischen Dispersionsvorrat und Folienbahn gestattet. Für den beidseitigen Antrag kann mit einem Walzenantragssystem oder mit einem Walzenantragssystem in Kombination mit einer Drahtrakel gearbeitet werden. Das Beschichtungsgewicht beträgt je Oberfläche 3 bis 15, insbesondere 7 bis 11 $g/m^2$ für die Sperrschicht und 5 bis 9 $g/m^2$ für die durchlässige Oberflächenschicht.

Wie sich gezeigt hat, bilden sich relativ breite Risse in der durchlässigen Oberflächenschicht, wenn man in dieser Zwischenstufe den Wassergehalt der Folie aus Cellulosehydrat-Gel auf Werte unter 130 Gew.-% unter Schrumpfenlassen der Folie reduziert. Beim Unterschreiten dieser Werte wird die Siegelnahtfestigkeit zwar nicht wesentlich verschlechtert, doch zeigt dann die erhaltene Folie nicht ausreichende Festigkeitswerte und mangelhaftes Dehnungsverhalten, so daß sie zur Herstellung von schlauchförmigen Verpackungshüllen, insbesondere Wursthüllen, ungeeignet ist. Diese Eigenschaftsverschlechterung dürfte darauf zurückgehen, daß durch eine zu starke Teilentwässerung die Struktur des Cellulosehydrats negativ beeinflußt wird.

Andererseits wird der erwünschte feste Verbund zwischen Cellulosehydrat-Folie und den Oberflächenschichten, insbesondere mit der Sperrschicht, nicht erhalten, wenn man den Wassergehalt der Folie aus Cellulosehydrat-Gel auf

HOECHST AKTIENGESELLSCHAFT
KALLE Niederlassung der Hoechst AG

- 18 -

einen maximalen Wert von größer als 200 Gew.-% reduziert.
Wesentlich für den angestrebten Erfolg ist auch das
Schrumpfen der Folie in Querrichtung während der Teilentwässerung, wobei das Ausmaß gering sein kann und von
der abgegebenen Wassermenge abhängt.

Die Folie zeigt trotz der Unterbrechungen der auf ihrer
gesamten zweiten Oberfläche vorhandenen Schicht aus
thermoplastischem Material eine hohe mechanische Festigkeit der Siegelnaht bei mechanischer oder thermischer
Belastung, wenn aus der Folie durch längsaxiales Falten
und Versiegeln der sich überlappenden Seitenränder zu
einer Siegelnaht eine Schlauchhülle hergestellt wird
oder wenn die Folie als siegelbarer Folienstreifen in
einem Schlauch mit längsaxialer Siegelnaht verwendet
wird.

Die Festigkeit der Siegelnaht von Schlauchhüllen, die
aus der Folie der Erfindung hergestellt sind und/oder
einen Folienstreifen aus dieser Folie enthalten, ist
- trotz der Unterbrechungen und trotz der bevorzugten
rissigen Struktur der durchlässigen Schicht auf der
zweiten Oberfläche - größer als die mechanische Festigkeit des Trägermaterials aus faserverstärkter regenerierter Cellulose. Besonders bei der Herstellung von
Würsten, bei der die Naht beim Brühen der Wurst längere
Zeit heißem Wasser ausgesetzt ist, sowie beim Füllen,
Abdrehen, Abbinden, Klippen und dergleichen, wenn die
Naht hoher mechanischer Belastung und Spannungen standhalten muß und Dimensionsänderungen eintreten, ist die

HOECHST AKTIENGESELLSCHAFT
KALLE Niederlassung der Hoechst AG

- 19 -

hohe Festigkeit der Siegelnaht von großer Bedeutung.

Alle diese vorteilhaften Eigenschaften machen die Folie besonders geeignet zur Herstellung von Wursthüllen für Koch- und Brühwürste. Unter Kochwurst sind insbesondere Leberwurstsorten und Blutwurstsorten zu verstehen. Brühwürste sind beispielsweise Jagdwurst, Bierschinken, Fleischwurst, Gelbwurst und Mortadella.

Die Bildung einer Schlauchhülle mit längsaxial sich erstreckender Naht aus einer Folie durch Versiegeln der sich überlappenden Randbereiche der längsaxial sich erstreckenden Randzonen einer Folienbahn oder durch Versiegeln der Randbereiche mit einem Folienstreifen ist an sich bekannt, wozu ebenfalls auf die EP-A-0 054 162 verwiesen wird.

Die Schlauchhülle entsprechend der vorliegenden Erfindung wird entweder aus der um ihre Längsachse gebogenen, blatt- oder bahnförmigen rechteckigen oder endlosen Folie durch Überlappung und Verbinden der längsaxial sich erstreckenden Randbereiche hergestellt. Sie zeigt dann eine längsaxial sich erstreckende gesiegelte Überlappungsnaht, bei der sich Außen- und Innenseite der Folie überdecken (vgl. Fig. 1 der EP-A-0 037 543).

Wird die Folie dagegen als siegelbarer Folienstreifen verwendet, werden die Randbereiche der den Schlauch bildenden Folie auf Basis von Cellulose einander auf Stoß genähert und der Folienstreifen mit beiden Randbereichen

HOECHST AKTIENGESELLSCHAFT
KALLE Niederlassung der Hoechst AG

- 20 -

versiegelt (Fig. 3 der EP-A-0 037 543). Die den Schlauch bildende Folie muß mit der dem Folienstreifen zugewendeten Oberflächenschicht selbstverständlich siegelfähig sein. Vorzugsweise besteht diese Oberflächenschicht aus einer siegelfähigen Sperrschicht, welche die Innenseite des Schlauches bildet, und der Folienstreifen ist mit seiner gasdurchlässigen Schicht mit dieser siegelfähigen Sperrschicht versiegelt, so daß die gasundurchlässige Schicht des Folienstreifens dem Füllgut zugewendet ist

Die Herstellung der Schlauchhülle mit Überlappungsnaht erfolgt ebenfalls bevorzugt in der Art, daß die Barriereschicht der Folie die Innenseite der Schlauchhülle bildet. In dieser Ausführungsform zeigt die Schlauchhülle bei ihrer Verwendung als Wursthülle starken Schrumpf und kann sich dem Füllgut gut anpassen. Die Wursthülle liegt prall an der Wurstmasse an und verleiht der Wurst ein ansehnliches Aussehen. Sofern dieser Schrumpf nicht erwünscht ist, wird die Folie in der Weise zu einer Schlauchhülle geformt, daß die Barriereschicht der Folie die Außenseite der Schlauchhülle bildet.

Die Formung der bahnförmigen Folie zu einem Schlauch erfolgt beispielsweise entweder auf einer genügend langen Wegstrecke, so daß keine Verzerrungen und Faltenbildung erfolgt, oder durch Umlenkung über ein schulterartiges Formwerkzeug (EP-A-0 054 162, EP-A-0 080 120). Bahnbewegung und Versiegelung der Randzonen können taktweise oder kontinuierlich erfolgen.

Die Versiegelung erfolgt z.B. durch Kontakt mit einer auf eine bestimmte Temperatur vorgeheizten Siegelbacke oder -rolle. Für die Versiegelung kann jedoch jede andere Wärmequelle in Frage kommen, wie beispielsweise IR-Strahler, Hochfrequenz-Erwärmung oder Heißluft. Häufig ist es zweckmäßig, zusätzlich Druck auf die Siegelstelle auszuüben, z.B. durch Anpressen einer geneizten Rolle. Die angewandten Siegeltemperaturen und Drucke hängen weitgehend von den Stoffeigenschaften der Siegelschichten ab. In der Praxis wird man gewöhnlich Siegelschichten bevorzugen, die im Temperaturbereich von 120 bis 150°C Verbindungsnähte ergeben, die den Beanspruchungen in der Praxis standhalten.

Zur Verpackung von Fleischwaren in Form von Wurstmasse werden bekanntlich geraffte, Schlauchhüllen verwendet, die beim Einpressen der Wurstmasse fortlaufend entfältelt werden. Diese gerafften Hüllen werden bisher aus langen Schläuchen hergestellt, die man in Richtung ihrer Längsachse fördert und gegen eine Gegenkraft rafft, wobei die Länge der gerafften Hülle gewöhnlich nur noch 1 bis 3% der Ursprungslänge beträgt.

Auch die erfindungsgemäße Schlauchhülle kann gerafft werden. Sie wird beispielsweise mit dem aus der US-A-3,988,804 bekannten Vorrichtung gerafft. Ein Raffverhältnis von 1:70 bis 1:80 läßt sich ohne weiteres erreichen.

Es ist auch eine spiralförmige Verdrehung der Hülle und folglich eine Verdrillung der relativ dicken Nahtzone um die Längsachse der Hülle beim Raffvorgang möglich, aber nicht erforderlich. Dies geschieht beispielsweise mit an sich bekannten Raffvorrichtungen, wie sie z.B. in der US-A-2,819,488, US-A-3,619,854, US-A-3,594,857 und US-A3,766,603 beschrieben sind, oder nach dem in der EP-A0 093 326 angegebenen Verfahren.

Sofern die Schlauchhülle z.B. für empfindliche Nahrungsmittel vorgesehen ist, so wird die Folie oder die Schlauchhülle sterilisiert, wobei man übliche Methoden, wie z.B. Hitze- oder Ozonbehandlung oder Hochfrequenzbestrahlung, anwendet.

Bei der Verwendung als Wursthülle tritt keine Geschmacksbeeinflussung der Wurstmasse ein. Die Wursthülle und Siegelnaht zeigen große Festigkeit gegenüber Dehnungsbelastung und Volumenbeständigkeit beim Füllen mit Wurstmasse, Hantieren und Verarbeiten. Durch den beim Füllen auftretenden Druck und durch die beim Brühen und Abkühlen auftretenden Quell- und Schrumpfkräfte tritt überraschenderweise keine Schädigung der Naht ein, obwohl die eine Oberflächenschicht unterbrochen ausgebildet ist. Die Wursthülle ist auch bei tiefen Temperaturen lagerfähig und läßt sich gut aufschneiden.

Die Erfindung wird durch das folgende Beispiel näher erläutert:

Beispiel

Die Herstellung der Folie erfolgt wie in Fig. 1 der EP-A-0 054 162 gezeigt. Allerdings werden zwischen den Bädern (8) und dem Trockenteil (10) die erfindungswesentlichen Verfahrensschritte durchgeführt, und das in der Fig. 2 gezeigte Beschichtungsverfahren sowie die Vortrocknung im ersten Trockenteil (10) der Fig. 1 entfallen.

Eine Bahn aus langfaserigem Hanfpapier mit einer Flachbreite von 235 mm und einem Flächengewicht von 21 $g/m^2$ wird beidseitig mit Viskose beschichtet. Die Spaltbreite beträgt beispielsweise 0,8 mm, die Bahngeschwindigkeit 5 m/Min. Danach wird auf die mit Viskose versehene Bahn zur Fällung, d.h. Koagulation, und Regenerierung Regenerierflüssigkeit aufgebracht. Die Bahnbreite wird durch die an den beiden Bahnkanten angreifenden Nadelketten konstant gehalten, so daß die gewöhnlich beim Koagulieren und Regenerieren auftretende Schrumpfung in Querrichtung verhindert wird. Die faserverstärkte Folienbahn aus Cellulosehydrat-Gel durchläuft anschließend Wasch-, Entschwefelungs- und Weichmachungsbäder. Das letzte Bad, das die Folie aus Cellulosehydrat-Gel durchläuft, enthält eine 1 gew.-%ige wäßrige Lösung eines Haftvermittlers auf Basis eines kationischen Harzes, welches ein Reaktionsprodukt von Adipinsäure, Diethylentriamin und Epichlorhydrin ist (®Resamin HW 601, Hersteller Cassella). Die Folie wird mit dieser Lösung beidseitig beschichtet. Nach Verlassen dieses Bades hat die Folie aus Cellulosehydrat-Gel eine Breite von 210 mm und einen Wassergehalt von 250 Gew.-%.

Die nun folgende Teilentwässerung der Folienbahn wird
nach dem Verlassen des Bades (8) und vor dem Eintritt in
den Trockentunnel (10) der in Fig. 1 der EP-A-0 054 162
gezeigten Anordnung durchgeführt. Hierzu wird die Folienbahn über geheizte Walzen mit einer Oberflächentemperatur
von 70 bis 80°C geführt. Bei diesem Schritt schrumpft
die Folie auf eine Breite von 208 mm und ihr Wassergehalt wird auf 160 Gew.-% reduziert. Nach dieser Zwischenstufe wird die Folienbahn einer Beschichtungsvorrichtung
zum Aufbringen des die durchlässige Schicht ausbildenden
Mittels zugeführt, wie sie in der US-A-4,116,162 beschrieben ist. Als Dosierrakel wird eine Drahtrakel mit
einer Drahtstärke von 150 µm verwendet. Die aufgebrachte Schicht hat eine Naßfilmdicke von 13 bis 14 µm.

Als Beschichtungsmittel zur Ausbildung der durchlässigen
Schicht wird eine wäßrige Polymerdispersion eines carboxylgruppenhaltigen Copolymerisats aus überwiegend Vinylidenchlorid-Einheiten und geringen Anteilen von Acrylnitril-Einheiten und anderen polymerisierbaren Verbindungen mit einem Feststoffgehalt von 55 % verwendet
(® Diofan 208 D, Hersteller BASF).

Nach diesem ersten Antrag wird die nun einseitig beschichtete Folienbahn einer zweiten Beschichtungsvorrichtung zugeführt. Sie besteht aus einer rotierenden
Stahlwalze, die eine wäßrige Dispersion des gleichen
Copolymerisats mit einem Feststoffgehalt von 30 % aus einer Auftragswanne von unten auf die noch unbeschichtete Oberfläche der darüber laufenden Folienbahn aus Cellulosehydrat-Gel aufträgt. Mit Hilfe eines scharfen
Luftstrahls aus einer Breitschlitzdüse, einer sogenannten Luftbürste, wird der Überschuß der Dispersion abgestreift und der Auftrag egalisiert.

Die in der Fig. 1 der EP-A-0 054 162 gezeigte Vortrocknung im ersten Trockenteil (10) entfällt. Wie in dieser
Figur weiterhin gezeigt, wird statt dessen die mit den
Copolymerisat-Dispersionen beschichtete Folienbahn sofort an ihren Kanten von Nadelkluppenketten (12) erfaßt
und in einem Spannrahmen (13) durch mehrere Etagen eines
Trockenfeldes (14) geführt. Im Spannrahmeneinlauf wird
die Folie auf eine Breite von 218 bis 220 mm in Querrichtung verdehnt und danach - während sie weiterhin auf
diese Breite gehalten wird - getrocknet, vorzugsweise
bei etwa 150°C. Die Restfeuchte der Folie beträgt etwa 7
Gew.-%.

Die durchlässige Oberflächenschicht hat eine Dicke von 5
bis 7 $\mu$m, was einem Flächengewicht von etwa 7 bis 8
g/m$^2$ entspricht. Sie ist nicht geschlossen, sondern
weist parallele, linienförmige Risse in Maschinenrichtung auf, die unterschiedliche Längen im Bereich von
15 bis 500 $\mu$m zeigen. Die Breite der Risse liegt jeweils im Bereich von 8 bis 12 $\mu$m. Ihr gegenseitiger
durchschnittlicher Abstand beträgt etwa 60 $\mu$m. Zur
Messung des Abstands werden nur die relativ langen
Risse, d.h. größer als etwa 300 $\mu$m, berücksichtigt. Die

Risse erstrecken sich bis zur Cellulosehydratoberfläche.

Die als zweite hergestellte Oberflächenschicht ist dagegen geschlossen und praktisch völlig gasundurchlässig. Sie hat eine Dicke von 7 bis 9 $\mu$m, entsprechend einem Flächengewicht von 8 bis 10 g/m$^2$.

Aus der Folie wird nun ein Schlauch mit überlappenden Rändern geformt, wie es beispielsweise in Fig. 1 der EP-A-0 080 120 beschrieben ist. Die dort gezeigte Kontaktrolle (10) ist für das vorliegende Verfahren als geheizte Siegelrolle ausgebildet.

Es ist auch möglich, die Schlauchbildung in einem Arbeitsgang mit der Herstellung der Würste durchzuführen, indem man die Folie am Füllrohr einer Stopfvorrichtung in eine Schlauchhülle überführt und in diese gleichzeitig Wurstmasse einpreßt.

PATENTANSPRÜCHE


1. Folie aus faserverstärkter regenerierter Cellulose mit einer im wesentlichen gasundurchlässigen Schicht aus einem thermoplastischen siegelfähigen Harz, insbesondere aus einem Vinylidengruppen enthaltenden Copolymer, auf ihrer einen Oberfläche, wobei diese Schicht gegebenenfalls mit einer haftvermittelnden Schicht mit der Folienoberfläche verankert ist, geeignet zur Herstellung von Schlauchhüllen, insbesondere Wursthüllen, mit einer längsaxialen Siegelnaht, dadurch gekennzeichnet, daß die Folie auf ihrer anderen Oberfläche eine Schicht mit gasdurchlässigen linienförmigen, parallel zueinander sich erstreckenden Unterbrechungen aus einem thermoplastischen siegelfähigen Harz, insbesondere aus einem Vinylidengruppen enthaltenden Copolymer, aufweist, welche gegebenenfalls mit einer haftvermittelnden Schicht auf dieser anderen Oberfläche der Folie verankert ist.


2. Folie nach Anspruch 1, dadurch gekennzeichnet, daß die Unterbrechungen unterschiedliche Längen von 5 bis 1000, insbesondere 15 bis 500 /um und über ihre gesamte Länge im wesentlichen konstante Breiten von 2 bis 15, insbesondere 5 bis 12 /um, aufweisen, wobei ihre Tiefe der Dicke dieser Oberflächenschicht entspricht.


3. Folie nach Anspruch 1 oder 2, dadurch gekennzeichnet, daß die durchlässige Oberflächenschicht ein Flächengewicht von 3 bis 15, insbesondere 5 bis 9 g/m$^2$ zeigt.

4. Folie nach einem der Ansprüche 1 bis 3, dadurch gekennzeichnet, daß beide Oberflächenschichten aus dem gleichen Harz bestehen.

5. Schlauchhülle, insbesondere Wursthülle, mit einer längsaxialen Naht, bestehend aus einer zu einem Schlauch gebogenen Folie nach einem der Ansprüche 1 bis 4, wobei die beiden Randzonen der Folie sich gegenseitig überlappen und durch eine längsaxiale Siegelnaht miteinander verbunden sind.

6. Schlauchhülle, insbesondere Wursthülle, mit einer längsaxialen Naht, bestehend aus einer zu einem Schlauch gebogenen Folie aus faserverstärkter regenerierter Cellulose und einer im wesentlichen gasundurchlässigen Schicht aus einem thermoplastischen siegelfähigen Harz auf ihrer einen Oberfläche, wobei die beiden Randzonen der Folie einander auf Stoß genähert sind und ihre siegelfähige Oberfläche mit einem beide Randzonen überdeckenden Folienstreifen versiegelt ist, wobei der Folienstreifen und gegebenenfalls auch die Schlauchhülle aus der Folie nach einem der Ansprüche 1 bis 4 besteht.

7. Verfahren zur Herstellung der Folie nach einem der Ansprüche 1 bis 4, umfassend die nachstehenden aufeinanderfolgenden Schritte

    (a) Beschichten einer Faserbahn mit Viskose

    (b) Koagulieren der Viskose

    (c) Regenerieren der koagulierten Viskose zu
        Cellulosehydrat-Gel

(d) Waschen der Folie aus Cellulosehydrat-Gel

(e) gegebenenfalls Beaufschlagen der Folie aus Cellulosehydrat-Gel mit einer Haftvermittler enthaltenden Flüssigkeit

(f) Trocknen unter Bildung der Folie aus faserverstärkter regenerierter Cellulose auf einen Wassergehalt gleich/kleiner als 15 Gew.-%, bezogen auf das Gesamtgewicht der Folie,

wobei man die Faserbahn zumindest während des Schrittes (b) am Schrumpfen hindert und während des Schrittes (f) in Querrichtung dehnt, dadurch gekennzeichnet, daß man nach dem Schritt (d) bzw. (e) und vor dem Schirtt (f) die aus Cellulosehydrat-Gel bestehende faserverstärkte Folie bis zu einem Wassergehalt von 130 bis 200, insbesondere 140 bis 180 Gew.-%, bezogen auf die faserverstärkte Folie aus Cellulosehydrat-Gel, vortrocknet und während dieser Teilentwässerung die Folie in Querrichtung schrumpfen läßt sowie danach eine das Mittel zur Ausbildung der unterbrochenen Oberflächenschicht enthaltende wäßrige Dispersion auf die eine Folienoberfläche aufbringt, wobei der Feststoffgehalt dieser Dispersion mindestens 45, vorzugsweise 45 bis 65, insbesondere 50 bis 60 Gew.-% beträgt, und daß man vor, gleichzeitig oder nach dem Aufbringen dieser hochkonzentrierten Dispersion oder unmittelbar vor der Teilentwässerung eine das die Barriereschicht erzeugende Mittel enthaltende wäßrige Dispersion niedrigerer Konzentration auf die andere Folienoberfläche aufbringt.

8. Verfahren nach Anspruch 7, dadurch gekennzeichnet, daß die Wassermenge, welche aus der hochkonzentrierten Dispersion von der Folie aufgenommen wird, kleiner ist als die in der vorhergehenden Vortrocknung von der Folie abgegebene Wassermenge und daß gegebenenfalls die Wassermenge, welche aus der Dispersion mit niedrigerer Konzentration von der Folie aufgenommen wird, größer ist als die in der vorhergehenden Vortrocknung von der Folie abgegebene Wassermenge, wobei man die von der Folie während der Beschichtung aus den Dispersionen aufgenommenen Wassermengen durch Variation des Feststoffgehaltes der Dispersionen und/oder der Einwirkzeit der Dispersionen auf die Folie einstellt.

-------------